# EUROPEAN PATENT APPLICATION

(11) **EP 2 264 590 A2**
(43) Date of publication of application: **22.12.2010**
(21) Application number: 10165854.0
(22) Date of filing: 14.06.2010
(51) Int. Cl.: G06F 3/12

(54) **Printer and printing method using the same**

(30) Priority: 12.06.2009 KR 20090052153
(71) Applicant: Bixolon Co., Ltd., Suwon-si Gyeonggi-do (KR)
(72) Inventor: Cho, Young Kyoo, Gyunggi-do (KR); Hwang, Jun Ho, Gyunggi-do (KR); Kim, Tae Hwan, Gyunggi-do (KR); Kang, Chan Wook, Gyunggi-do (KR)
(74) Representative: Ketelaars, Maarten F.J.M.

(57) **Abstract**

There is provided a printing method including: receiving at least one of print data and control commands from a host device; storing print image data on the basis of the received print data when there is no previously stored print image data before the receiving of the print data, and storing print image data on the basis of the received print data after deleting previously stored print image data when there is the previously stored print image data before the receiving of the print data; and printing the stored print image data according to a preset control command among the control commands received from the host device.

## Description

### CROSS-REFERENCE TO RELATED APPLICATIONS

This application claims the priority of Korean Patent Application No. 10-2009-0052153 filed on June 12, 2009, in the Korean Intellectual Property Office, the disclosure of which is incorporated herein by reference.

### BACKGROUND OF THE INVENTION

### Field of the Invention

The present invention relates to a printer and a printing method using the same, and more particularly, to a printer capable of performing a printing process using a single control command regardless of a printing mode of the printer and reducing the amount of data transmitted from a host device to the printer and a printing method using the same.

### Description of the Related Art

In general, a terminal printer may receive print data and a control command from a host device and print an image on the basis of the print data received according to the control command. The printing mode of the terminal printer may be page mode or standard mode. In page mode, the printing of the received print data is performed according to page. In standard mode, the printing of the received print data is performed according to line.

According to the related art, when a printer is set to page mode or standard mode, it needs to use different commands for a printing process according to the printing mode. Also, in order to turn page mode into standard mode, the printer requires a separate control command, and accordingly, this causes complexity in a program for processing the control command.

Also, in standard mode, print data stored in a buffer is deleted after the printing thereof. In this regard, whenever the same print data is successively printed, it should be received from a host device. Accordingly, this causes a heavy data transfer load between the host device and the printer.

### SUMMARY OF THE INVENTION

An aspect of the present invention provides a printer having enhanced printing capabilities due to the achievement of a reduction in the transfer load of print data transferred from a host device to the printer by repeatedly printing print image data stored in a print buffer using a single control command regardless of a printing mode of the printer and a printing method using the same.

According to an aspect of the present invention, there is provided a printing method including: receiving at least one of print data and control commands from a host device; storing print image data on the basis of the received print data when there is no previously stored print image data before the receiving of the print data, and storing print image data on the basis of the received print data after deleting previously stored print image data when there is the previously stored print image data before the receiving of the print data; and printing the stored print image data according to a preset control command among the control commands received from the host device.

The printing method may further include designating a position of part of the stored print image data to be deleted according to a preset control command among the control commands received from the host device.

The storing of the print image data may include deleting the print image data disposed in the designated position and subsequently storing the print image data on the basis of the received print data in the designated position.

According to another aspect of the present invention, there is provided a printer including: a storage unit storing print image data on the basis of print data received from a host device; a print controlling unit performing a printing process of the print image data stored in the storage unit according to a preset control command among control commands received from the host device; and an adjusting unit adjusting operations of the storage unit such that when there is no print image data previously stored in the storage unit before the receiving of the print data, the adjusting unit allows the storage unit to store print image data on the basis of the received print data therein, and when there is print image data previously stored in the storage unit before the receiving of the print data, the adjusting unit allows the storage unit to delete the previously stored print image data and store print image data on the basis of the received print data therein.

The printer may further include an area designating unit designating an area of print image data to be deleted among the print image data stored in the storage unit according to a preset control command among the control commands received from the host device.

The adjusting unit adjusts the storage unit to delete print image data disposed in the designated area and store print image data on the basis of the received print data therein.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a flowchart illustrating a printing method according to an exemplary embodiment of the present invention;

FIG. 2 is a block diagram illustrating a configuration of a printer according to another exemplary embodiment of the present invention;

FIGS. 3A and 3B show an example of the printing method according to the embodiment of FIG. 1; and

FIGS. 4A and 4B show another example of the printing method according to the embodiment of FIG. 1.

### DETAILED DESCRIPTION OF THE PREFERRED EMBODIMENT

Exemplary embodiments of the present invention will now be described in detail with reference to the accompanying drawings.

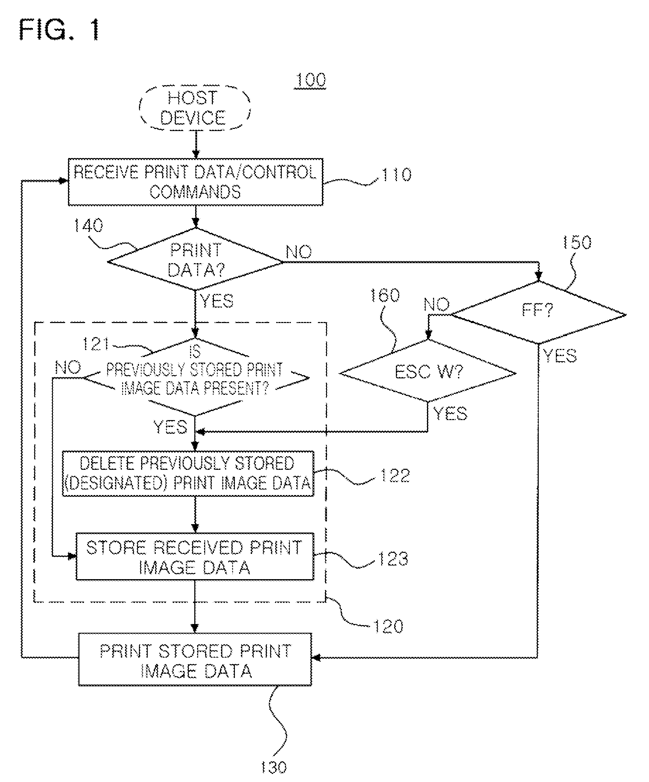

FIG. 1 is a flowchart illustrating a printing method of a printer according to an exemplary embodiment of the present invention.

Referring to FIG. 1, a printing method according to this embodiment may include receiving at least one of print data and control commands from a host device in a first operation 110, storing print image data on the basis of the received print data in a second operation 120, and printing the stored print image data according to a first control command among the control commands received from the host device in a third operation 130.

In the first operation 110, a printer may receive at least one of print data and control commands from the host device. That is, the printer using the printing method according to this embodiment may receive the print data to be printed from the host device. The print data may be image data or text data. Also, the printer may receive the control commands, allowing for the controlling of the operations of the printer, from the host device. The control commands may include a first control command commanding the printer to perform a printing process and a second control command designating a certain area of the stored print image data.

According to this embodiment, the print data or control commands may be received in the first operation 110.

It is determined in operation 140 whether the data received in the first operation 110 is print data. When it is determined as the print data, the printer may convert the received print data to print image data on the basis thereof, in order to perform the second operation 120. When it is determined as a control command rather than the print data, the printer may operate according to a preset control command.

In the second operation 120, it is first determined in operation 121 whether print image data, previously stored before the first operation 110, is present. When the previously stored print image data, which is stored before the receiving of the print data, is not present, print image data on the basis of the received print data may be stored in operation 123. In contrast, when the previously stored print image data is present, the previously stored print image data may be deleted in operation 122 and print image data on the basis of the received print data may be stored in operation 123.

When the data received in the first operation 110 is not the print data, but a control command controlling the operations of the printer, the printer may operate according to the received control command.

In the case that the data received in the first operation 110 is the first control command commanding the printer to perform the printing process, when the first control command is received in operation 150, the printer may print the print image data, stored in the second operation 120, in the third operation 130.

Specifically, in the printing method according to this embodiment, first print data and a first control command commanding a printing process may be received from the host device. At this time, first received print image data on the basis of the first print data may be stored, and may be then printed according to the first control command.

Even after completion of the printing, the first received print image data being stored is preserved without being deleted. When the printer receives the first control command from the host device again after completion of the printing, the printer may print the first received print image data being stored. Accordingly, when it is desired to repeatedly print the same image, it is only required to receive the first control command from the host device, thereby reducing unnecessary data transfer between the printer and the host device.

Also, when second print data is received after the completion of the printing of the first received print image data, the first received print image data being stored may be deleted and second received print image data on the basis of the received second print data may be stored. Accordingly, when new print data is received, print image data being stored may be updated. Then, of course, when the first control command is received, the second received print image data being stored may be printed. Here, the first print data is data before completion of the printing and the second print data is newly received data after completion of the printing.

According to this embodiment, the first control command may command the printer to perform the printing process in page mode in which the printing process is performed according to page as well as in standard mode in which the printing process is performed according to line. In the related art, different commands are used to command a printer to perform a printing process individually in page mode and in standard mode. In this embodiment, however, a control command for controlling the printer may be simplified to thereby enhance the reliability of the printer and the host device.

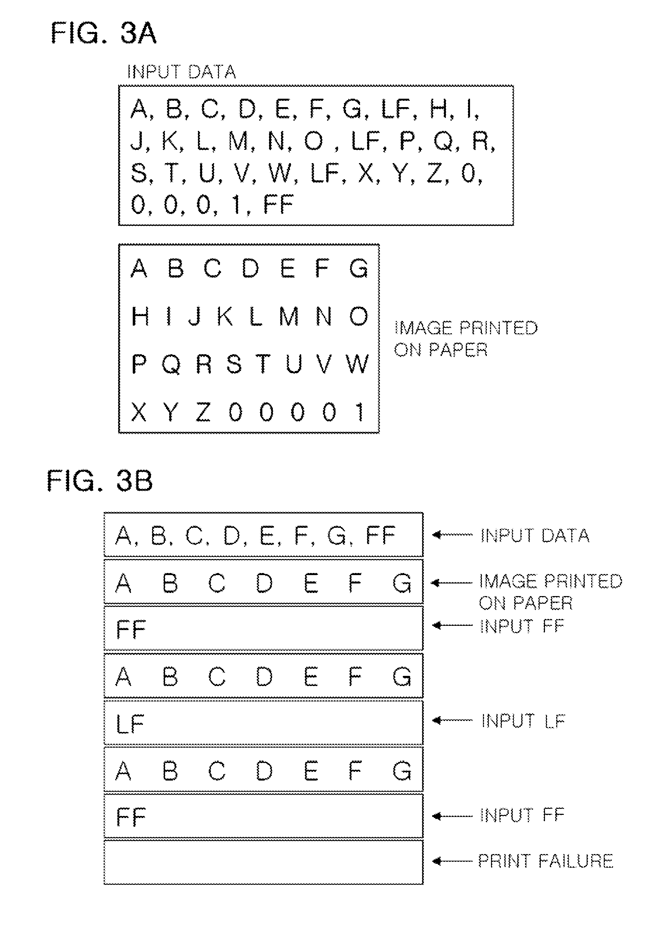

FIGS. 3A and 3B show an example of the printing method according to this embodiment.

With reference to FIG. 3A, the data received from the host device includes print data "A, B, C, D, E, F, G, H, I, J, K, L, M, N, O, P, Q, R, S, T, U, V, W, X, Y, Z, 0, 0, 0, 0, 1," a control command "FF" controlling a printing process, and a control command "LF" commanding a line change.

In this embodiment, since the printer is set to page mode, in which printing is performed according to page, the print data may be arranged by line according to the second control command "LF" included in the received data and be subsequently stored in a print buffer.

The print data may be stored as print image data based thereon in the print buffer. The stored print image data may be printed according to "FF." This print image data may be preserved in the print buffer even after completion of the printing. Therefore, when "FF" is received from the host device, the print image data may be repeatedly printed. At this time, when new print data is received, the print image data stored in the print buffer may be deleted and print image data on the basis of the new print data may be stored.

FIG. 3B shows another example of the printing method according to this embodiment. In this embodiment, the printer is set to standard mode in which printing is performed according to line.

With reference to FIG. 3B, text data "A, B, C, D, E, F, G" may be received as print data and "FF" may be received as a control command. When the print data and the control command are received, the printer may store print image data on the basis of the received print data in the print buffer and print the stored print image data according to "FF." Even after completion of the printing, the print image data "A, B, C, D, E, F, G" may be preserved in the print buffer.

Then, when "FF" is received from the host device again, the printer may print the print image data "A, B, C, D, E, F, G" preserved in the print buffer.

Then, when "LF" is received from the host device, the printer may print the print image data "A, B, C, D, E, F, G" preserved in the print buffer and subsequently delete the print image data from the print buffer.

Therefore, since no data is stored in the print buffer, even though "FF" is received from the host device, the printer is not able to perform a printing process.

The printing method according to this embodiment further includes designating a position of part of the stored print image data to be deleted according to the second control command received from the host device in operation 160. At this time, the print image data disposed in the designated position may be deleted and the print image data on the basis of the received print data may be stored in the designated position in the second operation 120.

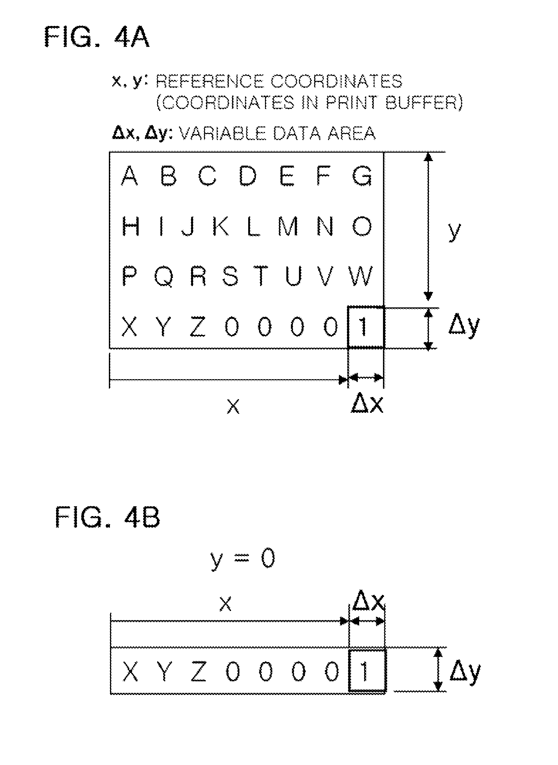

FIGS. 4A and 4B show an example of the printing method according to this embodiment.

FIGS. 4A and 4B show images printed in page mode in which printing is performed according to page and in standard mode in which printing is performed according to line, respectively.

With reference to FIG. 4A, print data may be received from the host device and stored in the print buffer as described above with reference to FIG. 3A, and the image as shown in FIG. 4A may be then printed by the control command "FF."

In this embodiment, a control command "ESC W" may be used to designate the position of variable data in order to perform incremental printing by disposing "1," which is positioned on the bottom right side of the image, to be counted incrementally in each printing, for example, "2, 3, 4, ... ".

When the control command "ESC W" designating the position of "1" and variable data "2" are transferred by the host device, the position of "1" of the print image data stored in the print buffer may be designated according to "ESC W" The print image data "1" disposed in the designated position may be deleted according to "ESC W" in operation 122. Also, in the print buffer, the received print data "2" may be stored in the position of the deleted data in operation 123.

Then, when the control command "FF" is received, print image data stored with the variable data may be printed.

FIG. 4B shows the image printed in standard mode in which printing is performed according to line by deleting the print image data disposed in the designated position and changing the deleted data to new print image data. That is, when print data "X, Y, Z, 0, 0, 0, 0, 1" and "FF" are received in the printer, print image data on the basis of the received print data may be printed. Then, when print data "2" and "ESC W" designating the position of "1" are received from the host device, "1" may be deleted and "2" may be stored in the position of the deleted data.

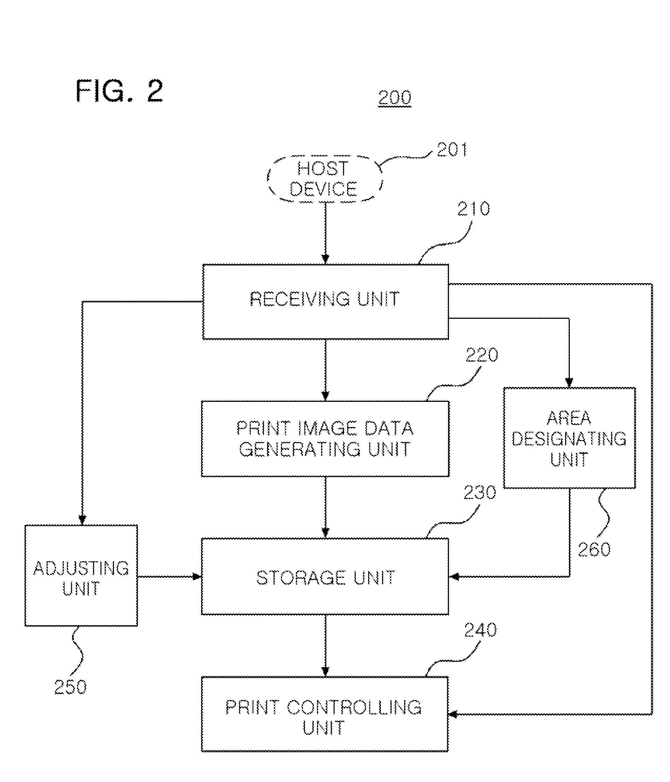

FIG. 2 is a block diagram illustrating a configuration of a printer according to an exemplary embodiment of the present invention.

With reference to FIG. 2, a printer 200 according to this embodiment may include a receiving unit 210, a storage unit 230, a print controlling unit 240, and an adjusting unit 250.

The receiving unit 210 may receive at least one of print data and control commands from a host device 201. That is, the printer 200 may receive print data to be printed from the host device 201. The print data may be image data or text data. Also, the printer 200 may receive control commands controlling the operations of the printer 200 from the host device 201. The control commands may include a first control command commanding a printing process and a second control command designating a certain area of the stored print image data.

The received print data may be converted into print image data by a print image data generating unit 220.

The storage unit 230 may store print image data on the basis of the print data received from the host device 201.

The print controlling unit 240 may perform a printing process of the print image data stored in the storage unit 230 according to the first control command received from the host device 201.

The adjusting unit 250 may adjust the operations of the storage unit 230 according to state of the storage unit 230. That is, the adjusting unit 250 may adjust the operations of the storage unit 230 in such a manner that when there is no print image data previously stored in the storage unit 230 before the receiving of the print data, the adjusting unit 250 may allow the storage unit 230 to store print image data on the basis of the received print data therein, and when there is print image data previously stored in the storage unit 230 before the receiving of the print data, the adjusting unit 250 may allow the storage unit 230 to delete the previously stored print image data and store print image data on the basis of the received print data therein.

Specifically, in the printer 200 according to this embodiment, when the receiving unit 210 receives first print data and the first control command commanding a printing process from the host device 201, the adjusting unit 250 adjusts the operations of the storage unit 230 so that first received print image data on the basis of the first print data may be stored in the storage unit 230. The print controlling unit 240 may print the first received print image data stored in the storage unit 230 according to the first control command.

According to this embodiment, even after completion of the printing, the first received print image data may be preserved without being deleted. Accordingly, when the first control command is received from the host device again after completion of the printing, the printer is able to print the first received print image data. Therefore, when it is desired to print the same print image data repeatedly, it is only required to receive the first control command from the host device, thereby reducing unnecessary data transfer between the printer and the host device.

When second print data is received from the host device 201 after completion of the printing, the adjusting unit 250 adjusts the operations of the storage unit 230 so that the first received print image data stored in the storage unit 230 may be deleted and second received print image data on the basis of the second print data may be stored in the storage unit 230. Therefore, in this embodiment, when new print data is received, print image data being stored may be updated. Then, when the first control command is received, the print controlling unit 240 may print the second received print image data stored in the storage unit 230. Here, the first print data is data before completion of the printing and the second print data is newly received data after completion of the printing.

According to this embodiment, the first control command may command the printer to perform printing in page mode in which the printing is performed according to page as well as in standard mode in which the printing is performed according to line. In a conventional printer, however, repeated printing is performed only in page mode. Since repeated printing is not allowed in standard mode, whenever the printing of even the same print data is performed in standard mode, the same print data needs to be transferred from the host device to the printer, thereby increasing data transfer load. Also, the conventional printer uses two control commands in order to preserve and delete print image data after being printed in page mode. In this embodiment, however, a single control command for controlling the printer is used to thereby enhance the reliability of the printer and the host device.

The printer according to this embodiment may further include an area designating unit 260 designating an area of print image data to be deleted among the print image data stored in the storage unit 230 according to the second control command received from the host device 201. Here, the adjusting unit 250 may adjust the operations of the storage unit 230 in such a manner that the adjusting unit 250 may allow the storage unit 230 to delete the print image data disposed in the designated area by the area designating unit 260 and to store print image data on the basis of the received print data therein.

As set forth above, according to exemplary embodiments of the invention, since a printer is capable of repeatedly printing print image data stored in a print buffer using a single control command regardless of a printing mode of the printer, a program may be simplified to thereby enhance the reliability of a host device and the printer. When the same print data is repeatedly printed, previously stored print image data may be used, and thus a reduction in the transfer load of data transferred from the host device and the printer may be achieved.

While the present invention has been shown and described in connection with the exemplary embodiments, it will be apparent to those skilled in the art that modifications and variations can be made without departing from the spirit and scope **of the invention as defined by the appended claims.**

## Claims

1. A printing method comprising:
receiving at least one of print data and control commands from a host device;
storing print image data on the basis of the received print data when there is no previously stored print image data before the receiving of the print data, and storing print image data on the basis of the received print data after deleting previously stored print image data when there is the previously stored print image data before the receiving of the print data; and
printing the stored print image data according to a preset control command among the control commands received from the host device.

2. The printing method of claim 1, further comprising designating a position of part of the stored print image data to be deleted according to a preset control command among the control commands received from the host device.

3. The printing method of claim 2, wherein the storing of the print image data comprises deleting the print image data disposed in the designated position and subsequently storing the print image data on the basis of the received print data in the designated position.

4. A printer comprising:
a storage unit storing print image data on the basis of print data received from a host device;
a print controlling unit performing a printing process of the print image data stored in the storage unit according to a preset control command among control commands received from the host device; and
an adjusting unit adjusting operations of the storage unit such that when there is no print image data previously stored in the storage unit before the receiving of the print data, the adjusting unit allows the storage unit to store print image data on the basis of the received print data therein, and when there is print image data previously stored in the storage unit before the receiving of the print data, the adjusting unit allows the storage unit to delete the previously stored print image data and store print image data on the basis of the received print data therein.

5. The printer of claim 4, further comprising an area designating unit designating an area of print image data to be deleted among the print image data stored in the storage unit according to a preset control command among the control commands received from the host device.

6. The printer of claim 5, wherein the adjusting unit adjusts the storage unit to delete print image data disposed in the designated area and store print image data on the basis of the received print data therein.
